# EUROPÄISCHE PATENTSCHRIFT

(11) **EP 4 015 919 B1**
(45) Veröffentlichungstag und Bekanntmachung des Hinweises auf die Patenterteilung: **18.06.2025**
(21) Anmeldenummer: 21212725.2
(22) Anmeldetag: 07.12.2021
(51) Int. Cl.: F24D 19/00, F24D 19/10, F24H 15/104, F24H 15/215, F24H 15/219, F24H 15/238, F24H 15/288, F24H 15/34

(54) **SYSTEM ZUR ERKENNUNG EINER VERSTOPFUNG IN EINEM ZENTRALHEIZKREISLAUF**
SYSTEM FOR DETECTING A CLOGGING IN A CENTRAL HEATING CIRCUIT
SYSTÈME DE DÉTECTION D'OBSTRUCTION DANS UN CIRCUIT DE CHAUFFAGE CENTRAL

(30) Priorität: 15.12.2020 TR 202020592
(43) Veröffentlichungstag der Anmeldung: 22.06.2022
(73) Patentinhaber: Bosch Termoteknik Isitmave Klima Sanayi Ticaret Anonim Sirketi, 45030 Manisa (TR)
(72) Erfinder: Kuzucanli, Seyit Ahmet, 45030 Manisa (TR); Pekguzelsu, Mustafa, 35590 Karsiyaka/Izmir (TR); Donmez, Durukan, 35050 Bornova/Izmir (TR)
(74) Vertreter: Bee, Joachim

(56) Entgegenhaltungen:
- EP-A1- 2 966 367
- EP-A1- 3 260 794
- JP-A- 2009 250 461
- JP-A- 2010 091 181

## Beschreibung

### TECHNISCHES GEBIET

Die Erfindung betrifft ein System und einen dieses System umfassenden Wasserheizer zur Erkennung einer zumindest partiellen Verstopfung in einem Zentralheizkreislauf eines Wasserheizers, umfassend eine erste Leitung, eine Heizzelle zum Erwärmen des durch die Heizzone der genannten ersten Leitung fließenden Wassers, eine Pumpe zum Pumpen des Wassers in der genannten ersten Leitung, wobei der Zentralheizkreislauf die genannte erste Leitung und einen Zentralheizkreis umfasst, der so mit der ersten Leitung verbunden ist, dass diese einen geschlossenen Kreislauf bilden.

### STAND DER TECHNIK

Wasserheizer sind mit einem Zentralheizkreislauf verbunden. Die Flüssigkeit im Kreislauf wird bei Einleitung in den Wasserheizer erwärmt, das erwärmte Wasser wird in den Zentralheizkreislauf geführt und abgekühlt, indem es durch Zentralheizkomponenten im Zentralheizkreislauf wie dem Heizkörper fließt und seine Wärme an die Zone abgibt, in der sich die Zentralheizelemente befinden, und wird wieder in den Wasserheizer geführt, nachdem es den Kreislauf beendet hat. Die Leitungen und Zentralheizkomponenten im Zentralheizkreislauf können im Laufe der Zeit aufgrund der durch das Zusammenwirken mit verschiedenen Partikeln, Wasser und Luft o.Ä. entstehenden Substanzen oder andere Faktoren verstopfen. Die Verstopfung führt zu einer verminderten Erwärmung der Zone durch die Zentralheizkomponenten. Dies wiederum führt dazu, dass der Benutzer die mit der Zeit zustande kommende Verstopfung nicht bemerkt und die Benutzung über einen längeren Zeitraum mit niedriger Kapazität erfolgt. Dies kann dazu führen, dass der Energieverbrauch steigt.

Letztlich führen alle oben erwähnten Probleme zur Notwendigkeit einer Neuerung auf dem relevanten technischen Gebiet.

Die EP2966367 A1 offenbart ein Warmwassergerät mit einem Fluidkreislauf, einem von dem Fluidkreislauf erwärmten Wasserkreislauf und einem mit dem Wasserkreislauf verbundenen Tank. Ein Benachrichtigungsmittel gibt eine Benachrichtigung heraus, wenn eine Fluidtemperatur größer oder gleich einem ersten Schwellwert ist und eine Wassertemperatur im Tank kleiner oder gleich einem zweiten Schwellwert ist.

Die JP2009250461 A offenbart ein Warmwassergerät mit einem Fluidkreislauf, einem Wasserkreislauf und einem mit dem Wasserkreislauf verbundenen Tank. Eine Solltemperatur des Wassers im Wasserkreislauf wird dann begrenzt, wenn ein Wasserdurchfluss im Wasserkreislauf trotz gleichbleibender Leistung einer Umwälzpumpe im Wasserkreislauf reduziert ist.

### KURZE BESCHREIBUNG DER ERFINDUNG

Die vorliegende Erfindung betrifft ein System zur Beseitigung der oben erwähnten Nachteile und zur Gewinnung neuer Vorteile auf dem relevanten technischen Gebiet.

Eine Aufgabe der Erfindung ist, ein System bereitzustellen, das erlaubt, Verstopfungen im Zentralheizkreislauf zu erkennen.

Eine weitere Aufgabe der Erfindung ist, ein System bereitzustellen, das ermöglicht, Verstopfungen im Zentralheizkreislauf früher festzustellen als die Systeme im Stand der Technik.

Eine weitere Aufgabe der Erfindung ist, ein vorbeugendes System bereitzustellen, das ermöglicht, die Lebensdauer der Komponenten der Wasserheizer zumindest teilweise zu verlängern.

Eine weitere Aufgabe der Erfindung ist, ein System bereitzustellen, das ermöglicht, die Verstopfung im Zentralheizkreislauf zumindest teilweise zu beheben.

Um alle oben erwähnten und sich aus der nachstehenden detaillierten Beschreibung ergebenden Aufgaben zu erfüllen, betrifft die vorliegende Erfindung ein System zur Behebung einer zumindest partiellen Verstopfung in einem Zentralheizkreislauf eines Wasserheizers, umfassend eine erste Leitung, eine Heizzelle zum Erwärmen des durch die Heizzone der genannten ersten Leitung fließenden Wassers, eine Pumpe zum Pumpen des Wassers in der genannten ersten Leitung, wobei der Zentralheizkreislauf die genannte erste Leitung und einen Zentralheizkreis umfasst, der so mit der ersten Leitung verbunden ist, dass diese einen geschlossenen Kreislauf bilden. Das System umfasst einen ersten Temperatursensor zum Messen der Temperatur des aus der Heizzone austretenden Wassers, einen zweiten Temperatursensor zum Messen der Temperatur des Wassers, bevor es in die Heizzone fließt, eine Durchflussmesseinrichtung zum Messen der Durchflussgeschwindigkeit des Wassers im Zentralheizkreislauf, mindestens eines von mindestens einer Strommessvorrichtung zum Messen des von einem elektrischen Punkt der Pumpe fließenden elektrischen Stroms, mindestens einer Energieverbrauchsmessvorrichtung zum Messen der von der Pumpe verbrauchten elektrischen Energie oder mindestens einem Drehzahlmesser zum Messen der Umdrehungen eines Pumpenflügels der Pumpe je nach Zeit; eine Steuereinheit, die so konfiguriert ist, dass sie so mit dem genannten ersten Temperatursensor, dem genannten zweiten Temperatursensor, der genannten Durchflussmesseinrichtung und mit mindestens einem von der genannten Strommessvorrichtung, der genannten Energieverbrauchsmessvorrichtung oder dem Drehzahlmesser verbunden ist, dass sie die Messungen empfängt und die empfangenen Messungen in einer Speichereinheit aufzeichnet, indem sie diese deren Empfangszeiten zuordnet. Dementsprechend besteht die Neuerung darin, dass die genannte Steuereinheit so konfiguriert ist, dass sie
- die aufgezeichneten Messungen überwacht
- und Signale bezüglich einer zumindest partiellen Verstopfung im Zentralheizkreislauf erzeugt, wenn
- in einem ersten Zeitintervall ein Zunahmetrend in den Differenztemperaturen der vom ersten Temperatursensor empfangenen und den vom zweiten Temperatursensor empfangenen Messungen erkannt wird, und
- in dem genannten ersten Zeitintervall ein Abnahmetrend in den vom Durchflusssensor empfangenen Messungen erkannt wird, und
- erkannt wird, dass die von der Strommessvorrichtung empfangene Messung bei einem ersten Maximalwert liegt, die von der Energierverbrauchsmessvorrichtung empfangene Messung bei einem zweiten Maximalwert liegt und/oder die von dem Drehzahlmesser empfangene Messung bei einem dritten Maximalwert liegt.

So wird gewährleistet, dass die Verstopfung im Zentralheizkreislauf erkannt wird. Dies führt dazu, dass die Verstopfung frühzeitig erkannt wird, und die Zeit, in der der Benutzer einer unkomfortablen Beheizung ausgesetzt wird, verkürzt wird. Durch die frühzeitige Erkennung kann der Technik-Service informiert und Prozeduren wie der Austausch von Ersatzteilen oder der Eingriff des Service-Technikers effizienter geplant werden und die Lebensdauer der Komponenten der Wasserheizer verlängert werden.

Das Merkmal einer möglichen Ausführungsform der Erfindung ist, dass sie eine Benutzerschnittstelle zum Senden des erzeugten Signals an den Benutzer umfasst, die durch die Steuereinheit gesteuert wird. So wird gewährleistet, dass der Benutzer über die Verstopfung informiert wird.

Das Merkmal einer weiteren möglichen Ausführungsform der Erfindung ist, dass die Steuereinheit so konfiguriert ist, dass sie die Pumpe so steuert, dass das Wasser im Zentralheizkreislauf turbulent fließt. Durch den turbulenten Fluss im Zentralheizkreislauf übt das Wasser eine Schneidkraft auf die Seiten aus und so wird gewährleistet, dass sich die eine Verstopfung verursachenden Partikel zumindest teilweise von der Leitungsoberfläche lösen.

Das Merkmal einer weiteren möglichen Ausführungsform der Erfindung ist, dass die erwähnte Benutzerschnittstelle an dem Wasserheizer vorgesehen ist.

Das Merkmal einer weiteren möglichen Ausführungsform der Erfindung ist, dass die erwähnte Benutzerschnittstelle vom Wasserheizer entfernt angeordnet ist und derart konfiguriert ist, dass sie drahtlos mit der Steuereinheit kommuniziert.

Das Merkmal einer weiteren möglichen Ausführungsform der Erfindung ist, dass die erwähnte Benutzerschnittstelle auf einem elektronischen Terminal vorgesehen, und derart konfiguriert ist, dass sie drahtlos mit der Steuereinheit kommuniziert.

Das Merkmal einer weiteren möglichen Ausführungsform der Erfindung ist, dass die erwähnte Durchflussmesseinrichtung in der ersten Leitung vorgesehen ist.

### KURZE BESCHREIBUNG DER FIGUREN

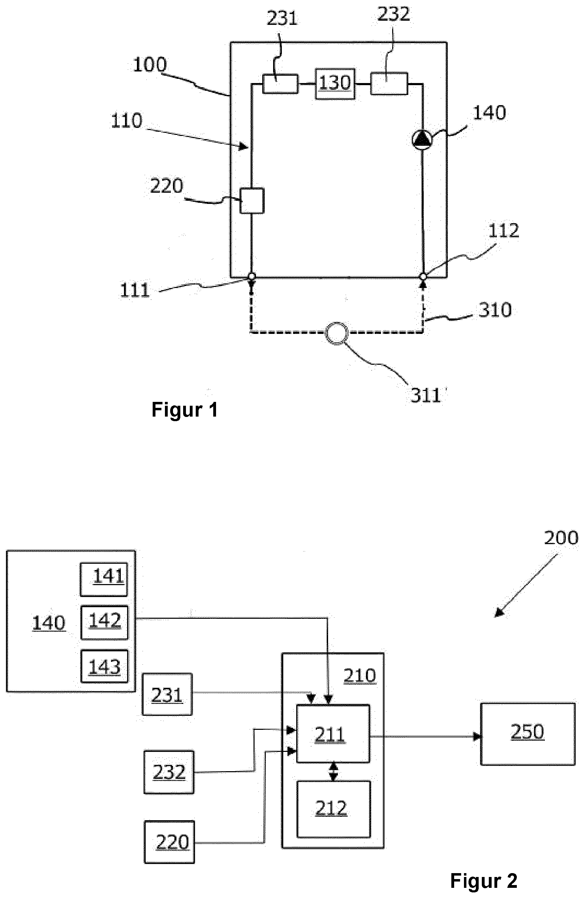

In Fig. 1 ist eine repräsentative Ansicht des Systems dargestellt.
In Fig. 2 ist eine schematische Ansicht des Systems dargestellt.
In Fig. 3 ist eine repräsentative Ansicht des in einem Kombi-Heizer ausgeführten Systems dargestellt.

### DETAILLIERTE BESCHREIBUNG DER ERFINDUNG

In dieser ausführlichen Beschreibung wird der Gegenstand der Erfindung anhand von Beispielen erläutert, die lediglich dem besseren Verständnis des Gegenstands dienen und nicht einschränkend sind.

Die Erfindung betrifft ein System (200) zur Erkennung einer zumindest partiellen Verstopfung in einem Zentralheizkreislauf eines Wasserheizers (100), umfassend eine erste Leitung (110), eine Heizzelle (130) zum Erwärmen des durch die Heizzone der genannten ersten Leitung (110) fließenden Wassers, eine Pumpe (140) zum Pumpen des Wassers in der genannten ersten Leitung (110), wobei der Zentralheizkreislauf die genannte erste Leitung (110) und einen Zentralheizkreis (310) umfasst, der so mit der ersten Leitung (110) verbunden ist, dass diese einen geschlossenen Kreislauf bilden.

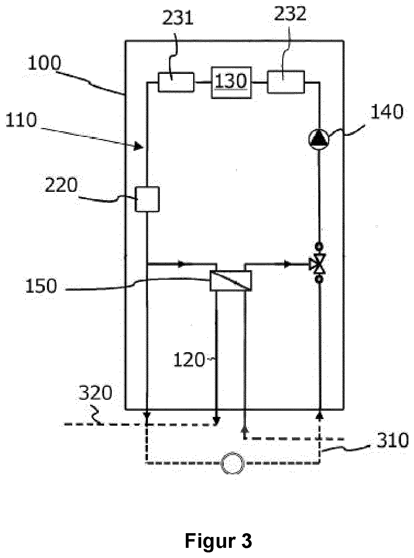

Der hier genannte Zentralheizkreislauf umfasst eine im Wasserheizer (100) vorgesehene erste Leitung (110) und einen Zentralheizkreis (310), in dem die in der ersten Leitung (110) erwärmte und aus der ersten Leitung (110) austretende Flüssigkeit zirkuliert. Der Zentralheizkreis (310) kann Zentralheizkomponenten wie Leitungen und Heizkörper umfassen. In einer möglichen Ausführungsform kann der Wasserheizer (100) ein Kombi-Wasserheizer wie in Fig. 3 sein. Mit anderen Worten wird sowohl gewährleistet, dass im Zentralheizkreislauf warmes Wasser zirkuliert, als auch, dass das Wasser in einer Hauswasserleitung (320) erwärmt wird. Die Hauswasserleitung (320) ist einem Wärmetauscher zugeordnet, dieser widerum ist über ein Ventil im Wasserheizer (100) mit der sich von der ersten Leitung (110) trennenden zweiten Leitung (120) verbunden. Das erwärmte Wasser erwärmt über die zweite Leitung (120) das Wasser in der Hauswasserleitung (320) im Wärmetauscher.

Im Falle einer Verlangsamung aufgrund eines Hindernisses, das den Pumpenflügel der Pumpe (140) im Zentralheizkreislauf in seinen Umdrehungen hindert, findet eine Abnahme in Variablen wie dem Kraftverbrauch der Pumpe (140) oder der Umdrehungsgeschwindigkeit des Pumpenflügels statt. Die Aufgabe der Erfindung ist, eine Verlangsamung des Durchflusses aufgrund einer Verstopfung im Zentralheizkreislauf, mit anderen Worten die Verstopfung im Zentralheizkreislauf zu erkennen.

Das erfindungsgemäße System (200) umfasst eine Durchflussmesseinrichtung (220) zum Messen des Volumenstroms der Flüssigkeit im Zentralheizkreislauf. In einer möglichen Ausführungsform kann die Durchflussmesseinrichtung (220) in der ersten Leitung (110) des Wasserheizers (100) angeordnet sein. Das System (200) umfasst einen ersten Temperatursensor (231) zum Messen der Temperatur des aus der Heizzone austretenden Wassers. Der genannte erste Temperatursensor (231) ist zwischen einem Zentralheizversorgungskopf (111) einer ersten Leitung (110), über die das aus der ersten Leitung (110) tretende erwärmte Wasser in den Zentralheizkreis (310) zugeführt wird und einer Heizzelle (130) vorgesehen. Um die Temperatur des Wassers zu messen, das kurz davor ist, in die Heizzone zu fließen, ist ein zweiter Temperatursensor (232) vorgesehen. Der genannte Temperatursensor ist zwischen einem Zentralheizrücklaufkopf (112) der ersten Leitung, welches gewährleistet, dass das Wasser im Zentralheizkreis (310) zirkuliert und wieder der ersten Leitung (110) zugeführt wird, und der Heizzelle (130) vorgesehen. Die Pumpe (140) kann auch zwischen der Heizzelle (130) und dem Zentralheizrücklaufkopf (112) vorgesehen sein.

Das System umfasst mindestens eines von einer Strommesseinrichtung (141) zum Messen des von einem elektrischen Punkt der Pumpe (140) fließenden Stroms, einer Energieverbrauchsmessvorrichtung zum Messen der von der Pumpe (140) verbrauchten elektrischen Energie oder einem Drehzahlmesser (143) zum Messen der Umdrehungen eines Pumpenflügels der Pumpe (140) je nach Zeit. In einer möglichen Ausführungsform der Erfindung kann das System (200) all diese Messvorrichtungen auf einmal umfassen. In einer möglichen Ausführungsform der Erfindung sind diese Mittel in die Pumpe (140) integrierte Komponenten.

Das System umfasst eine Steuereinheit (210), die so konfiguriert ist, dass sie die Messungen vom ersten Temperatursensor (231), vom zweiten Temperatursensor (232) und von der Durchflussmesseinrichtung (220) empfängt. Die Steuereinheit (210) ist zudem so konfiguriert, dass sie die Pumpe (140) steuert. Die Steuereinheit (210) ist zudem elektrisch mit der Energierverbrauchsmessvorichtung (142), der Strommessvorrichtung (141) und dem Drehzahlmesser (143) verbunden, so dass sie Messungen von mindestens einer dieser Komponenten empfängt.

Die Steuereinheit (210) umfasst eine Prozessoreinheit (211). Die Steuereinheit (210) umfasst zudem eine Prozessoreinheit (211), die ihr derart zugeordnet ist, dass sie Daten liest und Daten aufzeichnet. Die Prozessoreinheit (211) speichert die von den Sensoren und den Messvorrichtungen empfangenen Messungen in der Speichereinheit (212), indem sie diese deren Empfangszeiten zuordnet. Die Prozessoreinheit (211) kann ein Prozessor sein, die Speichereinheit (212) kann ein Speicher sein, der die Daten dauerhaft speichert. Die Speichereinheit (212) kann, wenn sie von der Prozessoreinheit (211) angetrieben wird, eine Software umfassen, die aus Befehlszeilen besteht, die gewährleisten, dass die Schritte, die gewährleisten, dass der Neuerungsaspekt des erfindungsgemäßen Systems (200) verwirklicht wird, ausgeführt werden.

Das System kann eine Benutzerschnittstelle (250) zur Bereitstellung von Informationen an den Benutzer umfassen. Die genannte Benutzerschnittstelle (250) kann ein Bildschirm sein. Die Benutzerschnittstelle (250) kann auf dem Wasserheizer (100) oder vom Wasserheizer (100) entfernt und derart angeordnet sein, dass sie drahtlos mit der Prozessoreinheit (211) kommuniziert: Die Benutzerschnittstelle (250) kann auch an einem mobilen elektronischen Terminal vorgesehen sein. Die Steuereinheit (210) kann auch eine Kommunikationsschnittstelle zum Senden von Signalen bezüglich einer Verstopfung an einen Server umfassen.

Als Neuerungsaspekt der Erfindung erkennt die Prozessoreinheit (211) die Verstopfung im Zentralheizkreislauf, indem sie die Sensoren und die Messvorrichtungen überwacht. Genauer führt die Prozessoreinheit (211) der Steuereinheit (210) folgende Schritte aus:
- Überwachung der aufgezeichneten Messungen
- Erzeugen eines Signals bezüglich einer zumindest partiellen Verstopfung im Zentralheizkreislauf, wenn
- in einem ersten Zeitintervall ein Zunahmetrend in den Differenztemperaturen der vom ersten Temperatursensor (231) empfangenen und den vom zweiten Temperatursensor (232) empfangenen Messungen erkannt wird,
- in dem genannten ersten Zeitintervall ein Abnahmetrend in den vom Durchflusssensor empfangenen Messungen erkannt wird,
- erkannt wird, dass die von der Strommessvorrichtung empfangene Messung bei einem ersten Maximalwert liegt, die von der Energieverbrauchsmessvorrichtung empfangene Messung bei einem zweiten Maximalwert liegt und/oder die von dem Drehzahlmesser (143) empfangene Messung bei einem dritten Maximalwert liegt.

Der hier genannte erste Maximalwert bezeichnet den vom genannten Punkt der Pumpe unter normalen Umständen erhältlichen höchsten Stromwert, der zweite Maximalwert bezeichnet den höchsten Energiewert, den die Pumpe unter normalen Umständen verbrauchen könnte, der dritte Maximalwert bezeichnet die höchste Drehzahl, die der Pumpenflügel der Pumpe unter normalen Umständen erreichen kann. Unter normalen Umständen verstehen sich hier Umstände, unter denen ein fehlerfrei funktionierender Wasserheizer die Pumpe nutzt, um zentral zu heizen.

Die Prozessoreinheit bestimmt den Zunahmetrend und Abnahmetrend wie folgt: Die Prozessoreinheit (211) erkennt den Zunahmetrend, wenn sie feststellt, dass sich die Anfangswerte und Endwerte einer vorgegebenen Anzahl überwachter Messungen in einem ersten Wertbereich befinden, welcher der Reihe nach über den Anfangswerten und Endwerten eines normalen Wertbereichs liegt, und erkennt den Abnahmetrend, wenn sie feststellt, dass sich die Anfangswerte und Endwerte einer vorgegebenen Anzahl überwachter Messungen in einem ersten Wertbereich befinden, welcher der Reihe nach unter dem Anfang und Ende eines normalen Wertbereichs liegt. Als Alternative kann der Zunahmetrend erkannt werden, wenn festgestellt wird, dass die Mehrzahl der aufeinanderfolgenden Messungen entsprechend der Zeit zunimmt, und dass sie über bestimmten Schwellenwerten liegt; der Abnahmetrend kann erkannt werden, wenn festgestellt wird, dass die Mehrzahl der aufeinanderfolgenden Messungen abnimmt, und dass sie unter bestimmten Schwellenwerten liegt. In einer möglichen Ausführungsform kann der Zunahme- oder Abnahmetrend durch Berücksichtigung der in bestimmten Intervallen beobachteten Maximal- und/oder Minimalwerte erkannt werden.

Da die Flüssigkeit den Kreislauf in einer längeren Zeitspanne durchfließen wird und weniger Wasser fließen wird, wenn im Zentralheizkreislauf eine Verstopfung vorliegt, erfährt die Flüssigkeit mehr Wärmeverlust. Zudem verweilt die Flüssigkeit länger in der Heizzone, da die Durchflussgeschwindigkeit abnimmt, und die Temperatur des aus dem Wasserheizer (100) austretenden Wassers steigt. Dies führt zu einer größeren Differenz zwischen den Temperaturen der aus der Heizzone austretenden Flüssigkeit und der im Zentralheizkreislauf zirkulierenden und zurück zur Heizzone fließenden Flüssigkeit. Dass der Flüssigkeitsstrom mit der Zeit verlangsamt, wird durch den Durchflusssensor erkannt. Da das Arbeiten der Pumpe (140) bei Maximalwerten zeigt, dass kein physikalisches Hindernis für die Umdrehungen der Pumpe (140) besteht, wird unter den oben genannten Umständen erkannt, dass im Zentralheizkreislauf eine Verstopfung besteht.

In einer möglichen Ausführunsform der Erfindung kann die Steuereinheit (210) die Verstopfung je nach Größe des Zunahmetrends und Abnahmetrends in Kategorien unterteilen.

Genauer ist die Steuereinheit (210) so konfiguriert, dass die Pumpe (140) im Falle einer Verstopfung im ersten Volumen so betrieben wird, dass die Flüssigkeit im ersten Volumen turbulent fließt. Dank dem turbulenten Fluss üben die Flüssigkeitspartikel durch nichtlineare Bewegungen (spiralförmig o.Ä.) vermehrt eine Schneidkraft auf die Seiten der Leitung aus. Dies wiederum gewährleistet, dass unerwünschte Partikel auf der Leitungsoberfläche, die eine Verstopfung verursachen, von der Leitungsoberfläche abgelöst werden und die Leitungsoberfläche gereinigt wird.

Damit die Verstopfung mit dem erfindungsgemäßen System (200) erkannt werden kann, muss die Überwachung über einen bestimmten Zeitraum erfolgen. Die Überwachung kann beispielsweise länger als 30 Tage erfolgen. Da die Verstopfung nicht plötzlich erfolgt, sondern mit der Zeit zustande kommt, können mit einer längeren Überwachung der durch die Verstopfung verursachte Zunahmetrend und der Abnahmetrend erkannt werden. Während der Überwachung müssen die Zustände der Zentralheizkomponenten beibehalten werden. Beispielsweise müssen alle Heizkörper eingeschaltet sein. Dadurch, dass die Überwachung über die Zeit erfolgt, wird verhindert, dass momentane Messfehler oder Messungen, die durch momentane Ereignisse auftreten, zu Fehlern bei der Erkennung von Verstopfungen führen.

Der Schutzumfang der Erfindung ist in den Ansprüchen in der Anlage angegeben und kann nicht auf das beschränkt werden, was in dieser detaillierten Beschreibung zum Zweck der Angabe von Beispielen erläutert wird. Es ist offensichtlich, dass der Fachmann auf dem technischen Gebiet im Lichte der obigen Erläuterungen ähnliche Ausführungsformen erstellen kann.

### DIE IN DEN FIGUREN ANGEGEBENEN REFERENZNUMMERN

100 Wasserheizer
110 Erste Leitung
111 Zentralheizversorgungskopf
112 Zentralheizrücklaufkopf
120 Zweite Leitung
130 Heizzelle
140 Pumpe
141 Strommessvorrichtung
142 Energieverbrauchsmessvorrichtung
143 Drehzahlmesser
150 Wärmetauscher
200 System
210 Steuereinheit
211 Prozessoreinheit
212 Speichereinheit
220 Durchflussmesseinrichtung
231 Erster Temperatursensor
232 Zweiter Temperatursensor
250 Benutzerschnittstelle
310 Zentralheizkreislauf
311 Zentralheizelement
320 Hauswasserleitung

## Patentansprüche

1. System (200) zur Erkennung einer zumindest partiellen Verstopfung in einem Zentralheizkreislauf eines Wasserheizers (100), umfassend eine erste Leitung (110), eine Heizzelle (130) zum Erwärmen des durch eine Heizzone der genannten ersten Leitung (110) fließenden Wassers, eine Pumpe (140) zum Pumpen des Wassers in der genannten ersten Leitung (110), wobei der Zentralheizkreislauf die genannte erste Leitung (110) und einen Zentralheizkreis (310) umfasst, der so mit der ersten Leitung (110) verbunden ist, dass diese einen geschlossenen Kreislauf bilden, wobei es einen ersten Temperatursensor (231) zum Messen der Temperatur des aus der Heizzone austretenden Wassers, einen zweiten Temperatursensor (232) zum Messen der Temperatur des Wassers, bevor es in die Heizzone fließt, eine Durchflussmesseinrichtung (220) zum Messen der Durchflussgeschwindigkeit des Wassers im Zentralheizkreislauf, mindestens eines von mindestens einer Strommessvorrichtung (141) zum Messen des von einem elektrischen Punkt der Pumpe (140) fließenden elektrischen Stroms, mindestens einer Energieverbrauchsmessvorrichtung (142) zum Messen der von der Pumpe (140) verbrauchten elektrischen Energie oder mindestens einem Drehzahlmesser (143) zum Messen der Umdrehungen eines Pumpenflügels der Pumpe (140) je nach Zeit; eine Steuereinheit (210), die so konfiguriert ist, dass sie so mit dem genannten ersten Temperatursensor (231), dem genannten zweiten Temperatursensor (232), der genannten Durchflussmesseinrichtung (220) und mit mindestens einem von der genannten Strommessvorrichtung (141), der genannten Energieverbrauchsmessvorrichtung (142) oder dem Drehzahlmesser (143) verbunden ist, dass sie die Messungen empfängt und die empfangenen Messungen in einer Speichereinheit (212) aufzeichnet, indem sie diese deren Empfangszeiten zuordnet, umfasst; **dadurch gekennzeichnet, dass** die genannte Steuereinheit so konfiguriert ist, dass sie
- die aufgezeichneten Messungen überwacht
- und Signale bezüglich einer zumindest partiellen Verstopfung im Zentralheizkreislauf erzeugt, wenn
- in einem ersten Zeitintervall ein Zunahmetrend in den Differenztemperaturen der vom ersten Temperatursensor (231) empfangenen und den vom zweiten Temperatursensor (232) empfangenen Messungen erkannt wird, und
- in dem genannten ersten Zeitintervall ein Abnahmetrend in den von der Durchflussmesseinrichtung (220) empfangenen Messungen erkannt wird, und
- erkannt wird, dass die von der Strommessvorrichtung (141) empfangene Messung bei einem ersten Maximalwert liegt, die von der Energieverbrauchsmessvorrichtung empfangene Messung bei einem zweiten Maximalwert liegt und/oder die von dem Drehzahlmesser (143) empfangene Messung bei einem dritten Maximalwert liegt.

2. System (200) nach Anspruch 1, ***gekennzeichnet dadurch,* dass** es eine von der Steuereinheit (210) gesteuerte Benutzerschnittstelle (250) zum Senden des erzeugten Signals an den Benutzer umfasst.

3. System (200) nach Anspruch 1, ***gekennzeichnet dadurch,* dass** die Steuereinheit (210) so konfiguriert ist, dass sie die Pumpe (140) so steuert, dass das Wasser im Zentralheizkreislauf turbulent fließt.

4. System (200) nach Anspruch 2, ***gekennzeichnet dadurch,* dass** die erwähnte Benutzerschnittstelle (250) an dem Wasserheizer (100) vorgesehen ist.

5. System (200) nach Anspruch 2, ***gekennzeichnet dadurch,* dass** die genannte Benutzerschnittstelle (250) vom Wasserheizer (100) entfernt angeordnet ist und derart konfiguriert ist, dass sie drahtlos mit der Steuereinheit (210) kommuniziert.

6. System (200) nach Anspruch 2, ***gekennzeichnet dadurch,* dass** die genannte Benutzerschnittstelle (250) auf einem elektronischen Terminal vorgesehen, und derart konfiguriert ist, dass sie drahtlos mit der Steuereinheit (210) kommuniziert.

7. System (200) nach Anspruch 1, ***gekennzeichnet dadurch,* dass** die genannte Durchflussmesseinrichtung (220) in der ersten Leitung (110) vorgesehen ist.

8. Wasserheizer (100), umfassend ein System (200) wie in den Ansprüchen 1 - 7.

9. Wasserheizer (100) nach Anspruch 8, ***gekennzeichnet dadurch,* dass** dieser ein Kombi-Wasserheizer ist.

## Claims

1. System (200) for identifying an at least partial blockage in a central heating circuit of a water heater (100), comprising a first line (110), a heating cell (130) for heating the water flowing through a heating zone of the mentioned first line (110), a pump (140) for pumping the water in the mentioned first line (110), wherein the central heating circuit comprises the mentioned first line (110) and a central heating loop (310) which is connected to the first line (110) such that they form a closed circuit, wherein the system comprises a first temperature sensor (231) for measuring the temperature of the water exiting from the heating zone, a second temperature sensor (232) for measuring the temperature of the water before it flows into the heating zone, a flow measuring device (220) for measuring the flow rate of the water in the central heating circuit, at least one of at least one current measuring apparatus (141) for measuring the electric current flowing from an electrical point of the pump (140), at least one energy consumption measuring apparatus (142) for measuring the electrical energy consumed by the pump (140) or at least one tachometer (143) for measuring the revolutions of a vane of the pump (140) with respect to time; a control unit (210) which is configured such that it is connected to the mentioned first temperature sensor (231), to the mentioned second temperature sensor (232), to the mentioned flow measuring device (220) and to at least one of the mentioned flow measuring apparatus (141), the mentioned energy consumption measuring apparatus (142) or the tachometer (143) such that it receives the measurements and records the received measurements in a memory unit (212) by way of associating these measurements with their reception times, **characterized in that** the mentioned control unit is configured such that it
- monitors the recorded measurements
- and generates signals relating to an at least partial blockage in the central heating circuit if
- an upward trend in the differential temperatures of the measurements received by the first temperature sensor (231) and the measurements received by the second temperature sensor (232) is identified in a first time interval, and
- a downward trend in the measurements received by the flow measuring device (220) is identified in the mentioned first time interval, and
- it is identified that the measurement received by the current measuring apparatus (141) is at a first maximum value, the measurement received by the energy consumption measuring apparatus is at a second maximum value and/or the measurement received by the tachometer (143) is at a third maximum value.

2. System (200) according to Claim *1,* ***characterized* in that** it comprises a user interface (250), which is controlled by the control unit (210), for transmitting the generated signal to the user.

3. System (200) according to Claim *1,* ***characterized* in that** the control unit (210) is configured such that it controls the pump (140) such that the water in the central heating circuit flows in a turbulent manner.

4. System (200) according to Claim 2, ***characterized* in that** the mentioned user interface (250) is provided on the water heater (100).

5. System (200) according to Claim 2, ***characterized* in that** the mentioned user interface (250) is arranged remote from the water heater (100) and is configured in such a way that it communicates wirelessly with the control unit (210).

6. System (200) according to Claim 2, ***characterized* in that** the mentioned user interface (250) is provided on an electronic terminal, and is configured in such a way that it communicates wirelessly with the control unit (210).

7. System (200) according to Claim *1,* ***characterized* in that** the mentioned flow measuring device (220) is provided in the first line (110).

8. Water heater (100), comprising a system (200) as in Claims 1-7.

9. Water heater (100) according to Claim 8, ***characterized* in that** it is a combined water heater.

## Revendications

1. Système (200) pour détecter une obstruction au moins partielle dans un circuit de chauffage central d'un chauffe-eau (100), comprenant une première conduite (110), une cellule de chauffage (130) pour chauffer l'eau s'écoulant à travers une zone de chauffage de ladite première conduite (110), une pompe (140) pour pomper l'eau dans ladite première conduite (110), le circuit de chauffage central comprenant ladite première conduite (110) et un circuit de chauffage central (310) relié à la première conduite (110) de manière à former un circuit fermé, comprenant un premier capteur de température (231) pour mesurer la température de l'eau sortant de la zone de chauffage, un deuxième capteur de température (232) pour mesurer la température de l'eau avant qu'elle ne s'écoule dans la zone de chauffage, un dispositif de mesure du débit (220) pour mesurer la vitesse d'écoulement de l'eau dans le circuit de chauffage central, au moins un dispositif de mesure de courant (141) pour mesurer le courant électrique circulant à partir d'un point électrique de la pompe (140), au moins un dispositif de mesure de la consommation d'énergie (142) pour mesurer l'énergie électrique consommée par la pompe (140) ou au moins un compte-tours (143) pour mesurer les tours d'une ailette de la pompe (140) en fonction du temps ; une unité de commande (210) configurée de manière à être reliée audit premier capteur de température (231), audit deuxième capteur de température (232), audit dispositif de mesure de débit (220) et à au moins un élément parmi ledit dispositif de mesure de courant (141), ledit dispositif de mesure de consommation d'énergie (142) ou le compte-tours (143), de façon à recevoir les mesures et à enregistrer les mesures reçues dans une unité de mémoire (212) en les associant à leurs temps de réception ; **caractérisé en ce que** ladite unité de commande est configurée pour
- surveiller les mesures enregistrées
- et générer des signaux relatifs à un colmatage au moins partiel dans le circuit de chauffage central lorsque,
- dans un premier intervalle de temps, est détectée une tendance à l'augmentation des différences de température entre les mesures reçues par le premier capteur de température (231) et celles reçues par le deuxième capteur de température (232), et
- dans ledit premier intervalle de temps, est détectée une tendance à la diminution des mesures reçues par le dispositif de mesure de débit (220), et
- il est détecté que la mesure reçue par le dispositif de mesure de courant (141) se situe à une première valeur maximale, que la mesure reçue par le dispositif de mesure de consommation d'énergie se situe à une deuxième valeur maximale et/ou que la mesure reçue par le compte-tours (143) se situe à une troisième valeur maximale.

2. Système (200) selon la revendication 1, **caractérisé en ce qu'**il comprend une interface utilisateur (250) commandée par l'unité de commande (210) pour envoyer le signal généré à l'utilisateur.

3. Système (200) selon la revendication 1, **caractérisé en ce que** l'unité de commande (210) est conçue pour commander la pompe (140) de telle sorte que l'eau circule de manière turbulente dans le circuit de chauffage central.

4. Système (200) selon la revendication 2, **caractérisé en ce que** ladite interface utilisateur (250) est prévue sur le chauffe-eau (100).

5. Système (200) selon la revendication 2, **caractérisé en ce que** ladite interface utilisateur (250) est agencée à distance du chauffe-eau (100) et est configurée pour communiquer sans fil avec l'unité de commande (210).

6. Système (200) selon la revendication 2, **caractérisé en ce que** ladite interface utilisateur (250) est prévue sur un terminal électronique et est configurée de manière à communiquer sans fil avec l'unité de commande (210).

7. Système (200) selon la revendication 1, **caractérisé en ce que** ledit dispositif de mesure de débit (220) est prévu dans la première conduite (110).

8. Chauffe-eau (100) comprenant un système (200) selon les revendications 1 à 7.

9. Chauffe-eau (100) selon la revendication 8, **caractérisé en ce qu'**il s'agit d'un chauffe-eau combiné.
